Europäisches Patentamt

(19) European Patent Office

Office européen des brevets

(11) EP 0 921 619 A2

(12) **EUROPEAN PATENT APPLICATION**

(43) Date of publication:
09.06.1999 Bulletin 1999/23

(51) Int. Cl.$^6$: **H02H 9/04**, H01L 27/02

(21) Application number: 98123288.7

(22) Date of filing: 07.12.1998

(84) Designated Contracting States:
AT BE CH CY DE DK ES FI FR GB GR IE IT LI LU
MC NL PT SE
Designated Extension States:
AL LT LV MK RO SI

(30) Priority: 08.12.1997 JP 33747297

(71) Applicant: NEC CORPORATION
Tokyo (JP)

(72) Inventor:
Hayashimoto, Hajime,
NEC IC Microcomputer Sys. Ltd
Kawaski-shi, Kanagawa (JP)

(74) Representative:
Glawe, Delfs, Moll & Partner
Patentanwälte
Postfach 26 01 62
80058 München (DE)

(54) **A power source circuit of a semiconductor integrated circuit**

(57) The pass transistor (8) is formed by a high withstanding voltage structure formed with double-diffusion layers. An N⁻ well is formed on top of a P⁻ semiconductor substrate, and a P⁻ well is formed within the N⁻ well. An $N^+$ diffusion region used as a source of a pass transistor and a $P^+$ diffusion region used as a back gate of the pass transistor are formed on top of the P⁻ well through a field oxide film. One terminal of a resistor (13), which is formed of polysilicon, for example, is connected to the $N^+$ diffusion region used as the source, and in the same way, the other terminal of the resistor is connected to the $P^+$ diffusion region used as the back gate. As a result, a power source circuit, which is composed of a MOS type transistor whose circuit current does not increase even in the case that the output terminal is short-circuited to power source voltage, can be provided.

FIG. 3

EP 0 921 619 A2

## Description

### BACKGROUND OF THE INVENTION

Field of the Invention

This invention relates to a power source circuit of a semiconductor integrated circuit having a protection circuit for preventing the semiconductor integrated circuit from destruction caused by over-current.

Description of the Related Art

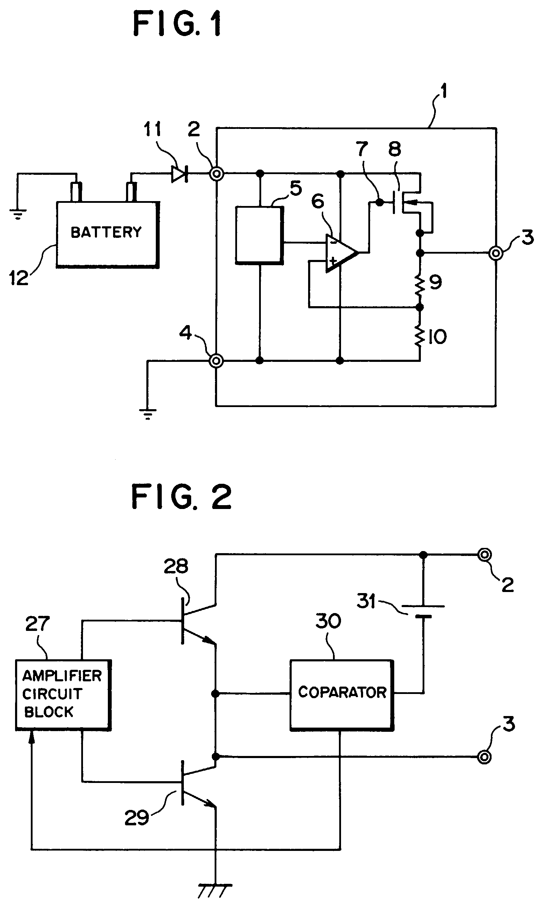

Fig. 1 is a block diagram showing a structure of a conventional power source circuit. Referring to Fig. 1, the power source circuit 1 is composed of a reference voltage source 5 connected between an input terminal 2 and an input terminal 4, an amplifier 6 and a CMOS (Complimentary Metal Oxide Semiconductor) type N-ch (N channel) pass transistor 8. The input terminal 2 is connected to a battery 12 via a backward flow preventing diode 11. The input terminal 4 is earthed. Resistors 9 and 10 are connected in series between a source of the pass transistor 8 and the input terminal 4. The source of the pass transistor 8 is connected to an output terminal 3 of the power source circuit 1. A drain of the pass transistor 8 is connected to the input terminal 2. The reference power source 5 is connected to the battery 12 via the input terminal 2 and the backward flow preventing diode 11. An output terminal of the reference power source 5 is connected to a negative input terminal of the amplifier 6. A positive input terminal of the amplifier 6 is connected to a node between the resistors 9 and 10. An output terminal of the amplifier 6 is connected to a gate (node 7) of the pass transistor 8.

In the above-described conventional power source circuit, when the output terminal 3 is short-circuited to the power-source voltage i, e, the battery 12, a parasitic PNP transistor in the pass transistor 8 is turned on, and the over-current is through the pass transistor 8. As a result, a heat generated by the over-current causes destruction of the pass transistor 8, in other words, the power source circuit 1 is destroyed.

A protection circuit to prevent the power source from such a short-circuit is disclosed in Published Unexamined Japanese Patent Application (Kokai) No. 62-296608, for example. The protection circuit will now be described with reference to Fig. 2.

Fig. 2 is a block diagram showing a structure of a protection circuit. In Fig. 2, a bipolar transistor 28 and a bipolar transistor 29 are connected between the input terminal 2 and earth. An amplifier circuit block 27 is connected to bases of the bipolar transistor 28 and the bipolar transistor 29. A node between the bipolar transistors 28 and 29 is connected to an output terminal 3.

A positive terminal of a voltage source 31 is connected to the input terminal 2. A negative terminal of the voltage source 31 is connected to one input terminal of a comparator 30. The other input terminal of the comparator 30 is connected to the node between the bipolar transistor 28 and the bipolar transistor 29. An output of the comparator 30 is input to the amplifier circuit block 27.

The comparator 30 compares a difference (VIN - V31) the potential VIN of the input terminal 2 and the voltage V31 of the voltage source 31 with the potential VOUT of the output terminal 3, and outputs a signal representing the comparison result to the amplifier block 27. In response to the comparison results representing VOUT > (VIN - V31), the amplifier circuit block 27 isolates a drive circuit of the bipolar output transistor 29. As a result, the over-current does not flow through the bipolar transistor 28 and the bipolar transistor 29.

Comparing with the CMOS transistor manufacturing process, however, the bipolar transistor manufacturing process requires a large number of process steps, an integrated rate is low, and a manufacturing cost is high.

In a case where the power source circuit is realized by using CMOS (Complimentary Metal Oxide Semiconductor) transistors producing process disclosed in Published Unexamined Japanese Patent Application (Kokai) No. 62-296608, which has less number of process steps, higher integrated rate, and lower manufacturing cost than the bipolar transistor producing process, the current does not flow to a GND terminal. When the output terminal is short-circuited to the power source, however, the over-current flows through the substrate formed with the CMOS transistor. As a result, the transistor is destroyed.

### SUMMARY OF THE INVENTION

It is an object of the present invention to provide a power source circuit of a integrated circuit including a protection circuit composed of CMOS type transistors whose circuit current does not increase even when an output terminal is short-circuited to a power source.

The power source circuit of the present invention prevents from increasing a circuit current by means of that a resistor element 13 interposed between a source of a pass transistor of the CMOS 17 and back gate 19.

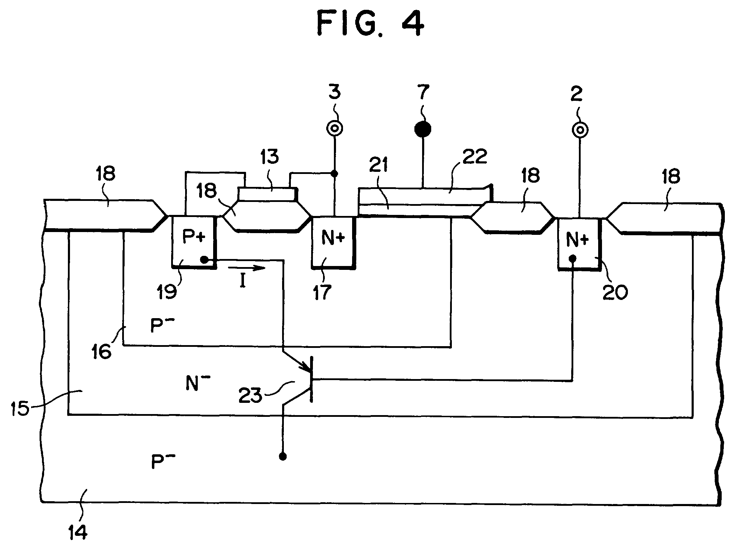

In a high withstanding voltage CMOS pass transistor formed with double-diffused layers used in a power source circuit shown in Fig. 4, when the output terminal is short-circuited to the power source voltage, a parasitic PNP transistor 23, which includes a back gate 19 as an emitter, a drain 20 as a base, and a P⁻ substrate 14 as a collector, is turned on, but the current flowing through the P⁻substrate 14 is limited by an interposed resistance element 13.

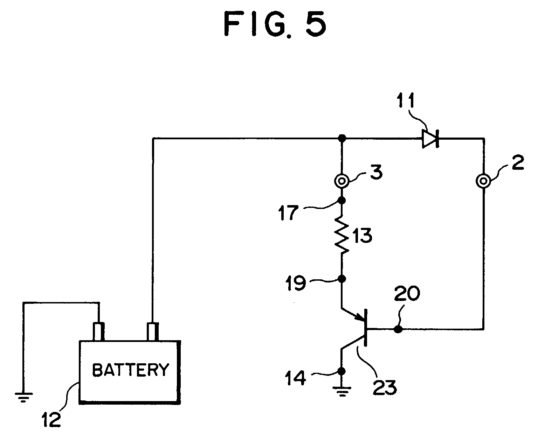

According to the present invention, the circuit current is limited by the resistor interposed between the back gate and the source, and the power source circuit uses such CMOS type transistors. Therefore, the power source circuit, which prevents from insulation destruction even in the case that an output terminal is short-circuited to a power source voltage as shown in Fig. 5, can be provided.

BRIEF DESCRIPTION OF THE DRAWINGS

Fig. 1 is a block diagram showing the structure of a conventional power source circuit.
Fig. 2 is a block diagram showing the structure of a over-current protective circuit of the conventional power source circuit.
Fig. 3 is a block diagram showing the structure of a power source circuit according to the first embodiment to the present invention.
Fig. 4 is a sectional view showing the structure of a CMOS type N-ch pass transistor according to the first embodiment of the present invention.
Fig. 5 is a block diagram showing an equivalent circuit of a pass transistor 8 in a case that an output terminal 3 is short-circuited to a battery 12.
Fig. 6 is a block diagram showing the structure of a power source circuit according to the second embodiment of the present invention.
Fig. 7 is a side sectional view showing the structure of a CMOS type P-ch transistor according to the second embodiment of the present invention.

DETAILED DESCRIPTION OF THE PREFERRED EMBODIMENTS

The preferred embodiments of the present invention will now be described in detail with reference to the attached drawings.

First Embodiment

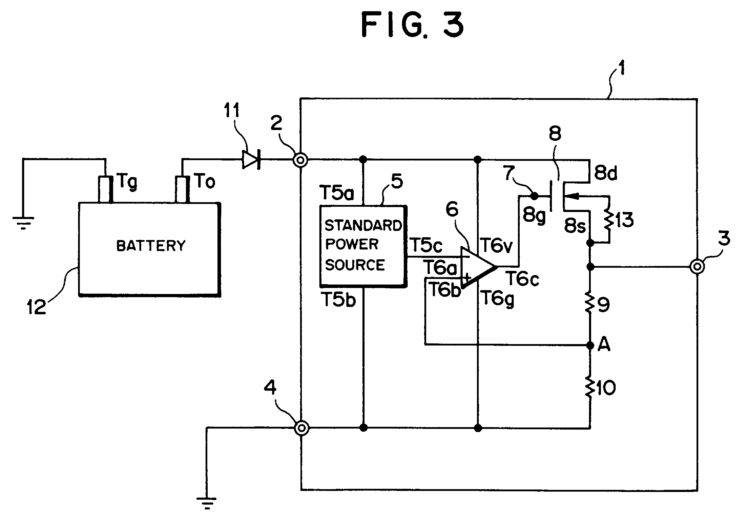

Fig. 3 is a block diagram showing the structure of a power source circuit according to the first embodiment of the present invention.
An input terminal 2 of a power source circuit 1 is connected to an output terminal To through a backward flow preventing diode 11. An input terminal 4 of the power source circuit 1 is earthed, and an electric power generated by the power source circuit 1 is output from an output terminal 3.
The power source circuit includes a reference voltage source 5, an amplifier 6, a CMOS type N-ch pass transistor 8, a resistor 9 and a resistor 10.
An input terminal T5a of the reference voltage source 5 is connected to the input terminal 2. An input terminal T5b of the reference voltage source 5 is connected to the input terminal 4. An output terminal T5c is connected to a positive input terminal T6a of the amplifier 6. The reference voltage source 5 generates voltages with a reference value based on a voltage value of a voltage supplied from a battery 12.
An output terminal T6c of the amplifier 6 is connected to a gate terminal 8g of the pass transistor 8. A negative input terminal T6b is connected to a node A betweem a dividing resistor 9 and a dividing resistor 10 which are connected in series. A power source terminal T6v of the amplifier 6 is connected to the input terminal 2 of the power source circuit 1, and an earth terminal T6g of the amplifier 6 is connected to the input terminal 4 of the power source circuit 1. The amplifier 6 amplifies the difference between the reference voltage input to the input terminal T6a and the voltage of the node A, and outputs a signal representing the amplified difference from the output terminal T6c.
In the pass transistor 8, a drain terminal 8d is connected to the input terminal 2, and a source terminal 8s is connected to a terminal, which is not connected to the node A, of the dividing resistor 9. Moreover, in the pass transistor 8, the source terminal 8s is connected to the output terminal 3 of the power source circuit 1, such a current as would generate, at the source terminal 8s, the voltage corresponding to the voltage supplied to the gate terminal 8g, flows to the output terminal 3 through the pass transistor 8.
Next, the pass transistor 8 will now be described in more detail with reference to Fig. 4.
Fig. 4 is a sectional view showing the structure of the CMOS type N-ch pass transistor 8 shown in Fig. 3. The pass transistor 8 is formed with a double-diffused high withstanding voltage CMOS structure.
In Fig. 4, field oxide films 18 are formed partially on a semiconductor substrate 14. An element forming region is divided by the field oxide films 18. An $N^-$ well 15 is formed in the surface of the $P^-$ type semiconductor substrate 14, and a $P^-$ well 16 is formed in the $N^-$ well 15.
On the $P^-$ well 16, one field oxide film 18 is located between an $N^+$ diffusion region 17 used as a source of the pass transistor 8 and a $P^+$ diffusion region 19 used as a back gate of the pass transistor 8. A resistor 13, which is composed of polysilicon, for example, is formed on the field oxide film 18 between the $N^+$ diffusion region 17 and the $P^+$ diffusion region 19. One terminal of the resistor 13 is connected to the $N^+$ diffusion region 17 used as the source, and the other terminal of the resistor 13 is similarly connected to the $P^+$ diffusion region 19 used as the back gate of the pass transistor.
An $N^+$ diffusion region 20 is formed in the $N^-$ well 15. An insulation layer 21 is formed on the $P^-$ well 16 between the field oxide film 18 and the $N^+$ diffusion region 17, and a gate electrode 22 is formed on the insulation layer 21.
The CMOS type N-ch pass transistor 8 has the above-described structure.
And, the $N^+$ diffusion region 17 used as the source of the pass transistor 8 is connected to the output terminal 3 of the pass transistor 8. The $P^+$ diffusion region 19 used as the back gate is connected to the output terminal 3 through the resistor 13. The N⁺ diffusion region 20 used as the drain is connected to the input terminal 2, and the gate electrode 22 is the output terminal T6c of the amplifier 6.

Next, the operation of the power source circuit according to this embodiment will now be described with reference to Figs. 3, 4 and 5.

Fig. 5 is a block diagram showing an equivalent circuit of the pass transistor 8 in the case where the output terminal 3 is short-circuited to a anode side of the backward flow preventing diode 11 or the output terminal To of the battery 12 by accident.

As the result of the short-circuit, a voltage value of the N⁺ diffusion region (source) 17 of the pass transistor 8 is higher than that of the N⁺ diffusion region (drain) 20 by the forward voltages of the backward flow preventing diode 11, and a parasitic PNP transistor 23, which includes a back gate 19 used as an emitter, a drain 20 used as a base, and a P⁻ substrate 14 used as a collector, is turned on. Accordingly, a current $I_{SUB}$ flows from the P⁺ diffusion region 19 to the P⁻ substrate 14. However, since the resistor 13 is interposed between the N⁺ diffusion region (source) 17 and the P⁺ diffusion region 19 used as the back gate, the value of the current $I_{SUB}$ is limited. Therefore, the value of the current $I_{SUB}$, which flows to the P⁻ substrate 14, is limited, as seen from the equations described below:

$$I_{SUB} = (1+1/h_{FE})^{-3} \times Is \qquad (1)$$

$$I_S = I_{SO} \times exp\ [(q/kT) \times (VF - R13 \times I_S) \qquad (2)$$

wherein $h_{FE}$ is the current amplifying rate of the parasitic PNP transistor 23, $I_S$ is the source current, $q/kT$ is 38.6, $I_{SO}$ is the emitter saturation current of the parasitic PNP transistor 23, VF is the forward voltage of the diode 11, and R13 is the resistance of the resistor 13 interposed between the source 17 and the back gate 19.

Let it be assumed that, $I_{SO}$ is 5E - 18 (A) and VF is 1.2 (V) when hFE is 1, and R13 is a polysilicon resistor. The aforementioned values are substituted for $I_{SO}$ and VF in the equations (1) and (2). In the case, when R13 is 50 (Ω), $I_{SUB}$ is 5.9 (mA). When R13 is 500 (Ω), $I_{SUB}$ is 695 (μA). When R13 is 5K (Ω), $I_{SUB}$ is 82 (μA). As a result, $I_{SUB}$ becomes a very small value.

The present invention according to the first embodiment has been described, however, the present invention is not limited the above-described embodiment and modifications or changes may be made without departing from the spirit of the present invention.

Second Embodiment

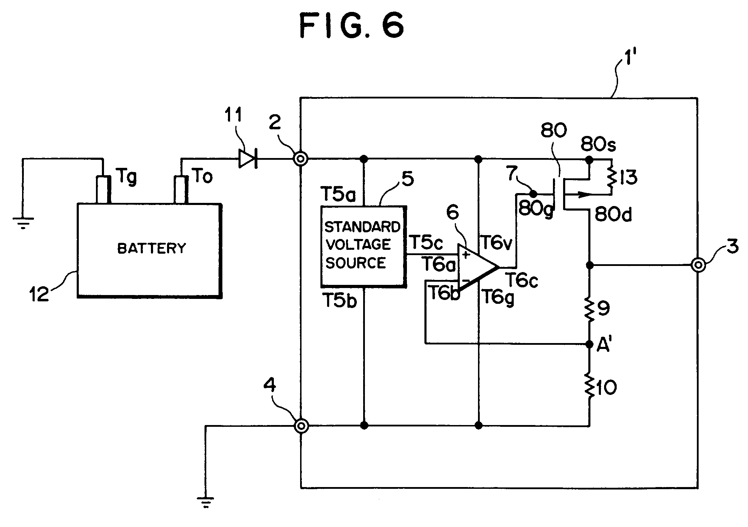

The power source circuit according to the second embodiment of the present invention will now be described with reference to Fig. 6. This embodiment is described as the case where the CMOS type N-ch pass transistor 8, which is described in the first embodiment of the present invention, is changed into a CMOS type P-ch (P channel) pass transistor 80.

In the CMOS type P-ch pass transistor 80, a source terminal 80s is connected to the input terminal 2, and connected to a back gate of the pass transistor 80 through a resistor 13. A drain terminal 80d is connected to the output terminal 3. As a result, a regulation starting voltage is decreased. Similar marks and reference numerals used in Fig. 3 and Fig. 6 denote corresponding or identical components, therefore, explanations of those components are excluded.

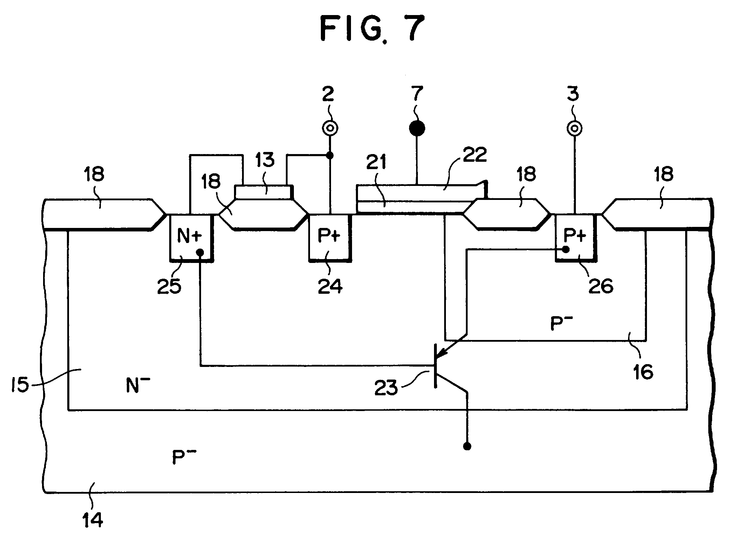

Fig. 7 is a sectional view showing the structure of the CMOS type P-ch pass transistor 80 shown in Fig. 6. The CMOS type P-ch pass transistor 80 is formed having a double-diffused high withstanding voltage structure. As shown in Fig. 7, an N⁻ well 15 is formed in the P⁻ substrate 14. A P⁻ well 16 is formed in the N⁻ well 15. A P⁺ diffusion region 24 used as a source terminal 80s of the CMOS type P-ch pass transistor 80 and a N⁺ diffusion region 25 used as a back gate of the CMOS type P-ch pass transistor 80 are formed in the N⁻ well 15, the P⁺ diffusion regions 24 and the N⁺ diffusion being separated by a field oxide film 18.

One terminal of the resistor 13, which is composed of polysilicon (polycrystalline silicon), is connected to the P⁺ diffusion region 24 used as the source terminal 80s. The other terminal of the resistor 13 is connected to the N⁺ diffusion region 25 used as the back gate. A P⁺ diffusion region 26 used as the drain terminal 80d is formed in the P⁻ well 16 separated by the field oxide film 18 from the junction of the N⁻ well 15 and the P⁻ well 16.

A gate electrode 22 is formed on the P⁻ well 16, with an insulation layer 21 therebetween.

The P⁺ diffusion region 26 used as the drain terminal 80d (with reference to Fig. 6) is connected to the output terminal 3. The N⁺ diffusion region 25 used as the back gate is connected to the input terminal 2 through the resistor 13. The P⁺ diffusion region 24 used as the source terminal 80s is connected to the input terminal 2. The gate electrode 22 is connected to an output terminal T6c of an amplifier 6 through a node 7.

In the above-described second embodiment shown in Fig. 7, as when the output terminal 3 is accidentally connected to the output terminal To of the battery 13, a parasitic PNP transistor 23, which includes the P⁺ diffusion region 26 (drain terminal 80d) as an emitter, the N⁺ diffusion region (back gate) 25 as a base, and a P⁻ substrate 14 as a collector, is turned on, but the current $I_{SUB}$ flowing through the P⁻ substrate 14 is limited by the resistor 13, as in the case of the first embodiment. As a result, the electric breakdown, which is caused by heat generated by the current $I_{SUB}$ flowing through the CMOS type P-ch pass transistor 80, is prevented.

## Claims

1. A power source circuit of an integrated circuit comprising:

   a first input terminal (2) to be connected to a power source (12);
   a second input terminal (4) to be connected to an earth;
   an output terminal (3); and
   a MOS transistor (8,80) whose current path is connected between said first input terminal and said output terminal;
   characterized by further comprising
   a resistor (13) connected between a source (8s,80s) of said MOS transistor (8,80) and a back gate of said MOS transistor.

2. The power source circuit of an integrated circuit according to claim 1, characterized in that said MOS transistor (8) is N-channel type, and a source of said MOS transistor is connected to said output terminal, and a drain of said MOS transistor is connected to said first input terminal.

3. The power source circuit of an integrated circuit according to claim 1, characterized in that said MOS transistor (80) is P-channel type, and a drain of said MOS transistor is connected to said output terminal, and a source of said MOS transistor is connected to said first input terminal.

4. The power source circuit of an integrated circuit according to claim 1, characterized by further comprising a reference voltage source (5) connected between said first input terminal and said second input terminal.

5. The power source circuit of an integrated circuit according to claim 4, characterized by further comprising an amplifier (6), characterized in that said first input terminal is connected to a power source terminal of said amplifier, and said second input terminal is connected to an earth terminal of said amplifier, and an output terminal of said reference voltage source is connected to a negative input terminal of said amplifier, and a gate of said MOS transistor is connected to an output terminal of said amplifier.

6. The power source circuit of an integrated circuit according to claim 5, further comprising a first resistor (9) and second resistor (10), which are connected in series, are connected between said MOS transistor and said second input terminal, and a positive input terminal of said amplifier (6) is connected to a node between said first resistor and said second resistor.

7. The power source circuit of an integrated circuit according to claim 2, characterized in that said MOS transistor comprises:

   a P⁻ semiconductor substrate (14);
   an N⁻ well (15) formed in said P⁻ semiconductor substrate;
   a P⁻ well (16) formed in said N⁻ well;
   a back gate P⁺ diffusion region (19) formed in said P⁻well (16);
   a source N⁺ diffusion region (17) formed on top of said P⁻ well (16) separated from said P⁺ diffusion region (19) by a field isolation film (18);
   a drain N⁺ region (20) formed on top of said N⁻ well separated from said P⁻ well (16) by a field isolation film (18); and
   a gate electrode (22) formed on top of said P⁻ well (16) through an insulation film (22).

8. The power source circuit of an integrated circuit according to claim 7, characterized in that said resistor (13) is formed on the field insulation film (18) between said P⁺ diffusion region (19) and said N⁺ diffusion region (17).

9. The power source circuit of an integrated circuit according to claim 3, characterized in that said MOS transistor comprises:

   a P⁻ semiconductor substrate (14);
   an N well (15) formed on said P⁻ semiconductor substrate;
   a P⁻ well (16) formed within said N well;
   a back gate N⁺ diffusion region (25) formed in said N⁻well (15);
   a source P⁺ diffusion region (24) formed in said N⁻well (15) separated by a field isolation film (18) from said N⁺ region (25);
   a drain P⁺ diffusion region (26) formed on said P⁻ well (16) separated by a field isolation film (18) from said N⁻well (15); and
   a gate electrode (22) formed on top of said N⁻ well (15) through an isolation film (21).

10. The power source circuit of an integrated circuit according to claim 8, characterized in that said resistor (13) is formed on the field insulation film (18) between said P⁺ diffusion region (24) and said N⁺ diffusion region (25).

11. The power source circuit of an integrated circuit according to claim 7, characterized in that said resistor is formed of polysilicon.

12. The power source circuit of an integrated circuit according to claim 9, characterized in that said resistor is formed of polysilicon.

# FIG. 1

# FIG. 2

# FIG. 3

# FIG. 4

EP 0 921 619 A2

# FIG. 5

# FIG. 6

EP 0 921 619 A2

# FIG. 7

EP 0 921 619 A2